# EUROPEAN PATENT APPLICATION

(11) **EP 4 822 755 A1**
(43) Date of publication of application: **14.10.2026**
(21) Application number: 25211430.1
(22) Date of filing: 27.10.2025
(51) Int. Cl.: H01M 4/13, H01M 10/04, H01M 10/0525, H01M 10/0583, H01M 10/0585, H01M 10/42, H01M 10/654, H01M 10/658

(54) **ELECTRODE ASSEMBLY FOR SECONDARY BATTERY**

(30) Priority: 11.04.2025 KR 20250047264
(71) Applicant: Samsung SDI Co., Ltd., Suwon-si, Gyeonggi-do (KR)
(72) Inventor: Kang, Min Jung, 17084 Yongin-si, Gyeonggi-do (KR)
(74) Representative: Gulde & Partner

(57) **Abstract**

Embodiments of the present disclosure provide an electrode assembly including a plurality of positive electrode plates each of which including a positive electrode substrate, a positive electrode active material layer provided on a side of the positive electrode substrate, and a positive electrode uncoated portion where the positive electrode active material layer is not provided. Further, the electrode assembly includes a plurality of negative electrode plates, at least one separator interposed between each of the positive electrode plates and each of the negative electrode plates, and blocking members inserted into one of the positive electrode plates and the negative electrode plates.

## Description

### BACKGROUND

### 1. Field

Embodiments of the present disclosure relate to an electrode assembly for a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable small electronic devices, such as smart phones, feature phones, notebook(laptop) computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not constitute related (or the prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure provide an electrode assembly for a secondary battery having an ignition suppression function.

These and other aspects and features of the present disclosure will be described in or will be apparent from the following description of embodiments of the present disclosure.

An electrode assembly according to the present invention includes a plurality of positive electrode plates each of which includes a positive electrode substrate, a positive electrode active material layer provided on a side of the positive electrode substrate, and the positive electrode substrate including a positive electrode uncoated portion where the positive electrode active material layer is not provided; a plurality of negative electrode plates; at least one separator interposed between each of the positive electrode plates and each of the negative electrode plates; and blocking members inserted into one of the positive electrode plates and the negative electrode plates.

The positive electrode plates may be folded so that the positive electrode uncoated portions face inward, and the blocking members are placed in the folded positive electrode plates.

The positive electrode uncoated portions may be arranged to face each other, and the blocking members may be placed between the positive electrode substrates.

The negative electrode plates may each include a negative electrode substrate, a negative electrode active material layer provided on a side of the negative electrode substrate, and the negative electrode substrate includes a negative electrode uncoated portion where the negative electrode active material layer is not provided.

The negative electrode plates may be folded so that the negative electrode uncoated portions face inward, and the blocking members may be placed in the folded positive electrode substrate.

The negative electrode uncoated portions may be arranged to face each other, and the blocking members may be placed between the negative electrode substrates.

The negative electrode plate may each include a negative electrode substrate, a negative electrode active material layer provided on both sides of the negative electrode substrate, and the negative electrode substrate includes a negative electrode uncoated portion where the negative electrode active material layer is not provided.

The separator may include a plurality of separators and the electrode assembly may be configured such that the positive electrode plates, the separators, and the negative electrode plates are stacked.

Alternatively, the separator may be folded in a zigzag form, and the positive electrode plates and the negative electrode plates may be alternately inserted to the separator.

Alternatively, the electrode assembly may be wound structure in which the separator is interposed between the positive electrode plate and the negative electrode plate.

The blocking members may include at least one of a fire extinguishing material and an insulating material.

The blocking members may be the same as a material placed on the positive electrode plates and the negative electrode plates.

The blocking members may have different materials placed on the positive electrode plates and the negative electrode plates.

The blocking members may be in the form of a sheet.

The blocking members may be thinner than the positive electrode substrate.

The blocking members may be thicker than the positive electrode substrate.

The blocking members may have a single-layer structure or multi-layer structure.

The blocking member may be configured to have at least one of the fire extinguishing material and the insulating material accommodated in a sealing member.

The blocking member may be configured to have at least one of the fire extinguishing material and the insulating material coated on the positive electrode substrates or the negative electrode substrates.

According to embodiments of the present disclosure, the structure and components for ignition suppression are provided within an electrode plate. As such, the performance of a secondary battery and battery module/pack is not affected under normal operating conditions. However, when there is damage to the secondary battery or battery module/pack, an ignition can be suppressed. Accordingly, the performance and safety of a secondary battery and battery module/pack can be improved.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a cross-sectional view showing a portion of a stacked electrode assembly according to an embodiment of the present disclosure.
FIG. 2 is a cross-sectional view showing a modified example of the electrode assembly according to FIG. 1.
FIG. 3 is a cross-sectional view showing a portion of a stacked electrode assembly according to another embodiment of the present disclosure.
FIG. 4 is a cross-sectional view showing a modified example of the electrode assembly according to FIG. 3.
FIG. 5 is a cross-sectional view showing a portion of a Z-stacked electrode assembly according to an embodiment of the present disclosure.
FIG. 6 is a cross-sectional view showing a modified example of the electrode assembly according to FIG. 5.
FIG. 7 is a cross-sectional view showing a portion of a Z-stacked electrode assembly according to another embodiment of the present disclosure.
FIG. 8 is a cross-sectional view showing a modified example of the electrode assembly according to FIG. 7.
FIG. 9 is a plan view of a stacked electrode assembly according to embodiments of the present disclosure.
FIGS. 10 to 12 are drawings showing exemplary secondary batteries to which an electrode assembly according to embodiments of the present disclosure is applied.
FIG. 13 is a perspective view schematically showing an electrode assembly according to another embodiment of the present disclosure.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Additionally, in order to facilitate understanding of the invention, the attached drawings are not drawn to scale and the dimensions of some components may be exaggerated. Additionally, the same reference numbers may be assigned to the same components in different embodiments.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the disclosure.

Hereinafter, an electrode assembly for a secondary battery according to embodiments of the present disclosure will be described in detail with reference to the attached drawings.

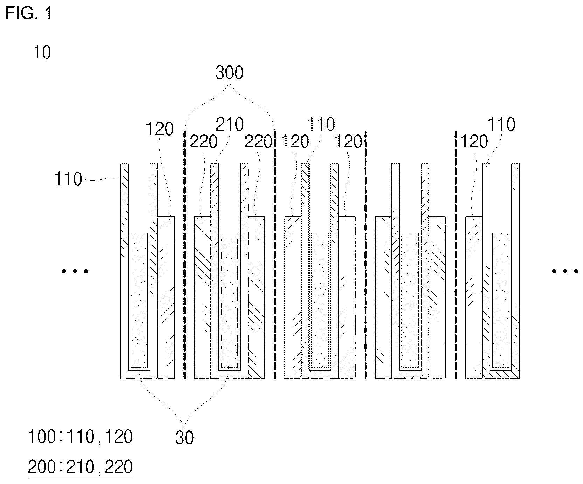

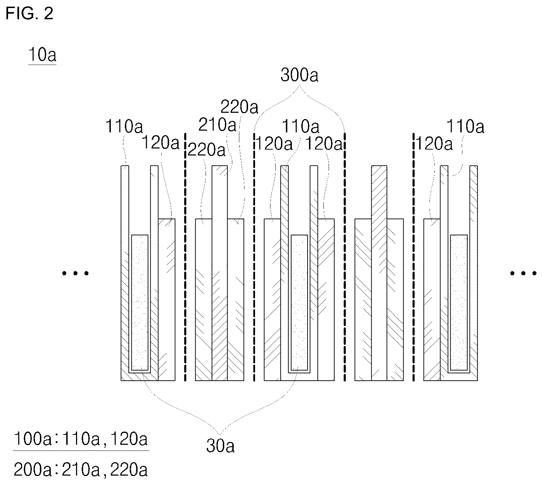

FIG. 1 is a cross-sectional view showing a portion of a stacked electrode assembly according to an embodiment of the present disclosure. FIG. 2 is a cross-sectional view showing a modified example of the electrode assembly according to FIG. 1.

Referring to FIG. 1, an electrode assembly 10 according to an embodiment of the present disclosure may include a plurality of positive electrode plates 100, a plurality of negative electrode plates 200, a plurality of separators 300, and a plurality of blocking members 30. The electrode assembly 10 may be a stacked electrode assembly 10 in which the separators 300 are inserted between the plurality of positive electrode plates 100 and negative electrode plates 200. In the depicted example, the order of stacking is the positive electrode plate 100, then the separator 300, then the negative electrode plate 200, then the separator 300, etc. That is, the plurality of positive electrode plates 100 and the plurality of negative electrode plates 200 may be alternately arranged. The separator 300 may be disposed between each pair of the positive electrode plate 100 and the negative electrode plate 200. A blocking member 30 may be inserted to each of the positive electrode plate 100 and the negative electrode plate 200. After the stacking, the electrode assembly 10 may be maintained in a stacked state by being fixed with a finishing tape, an insulating tape, or the like.

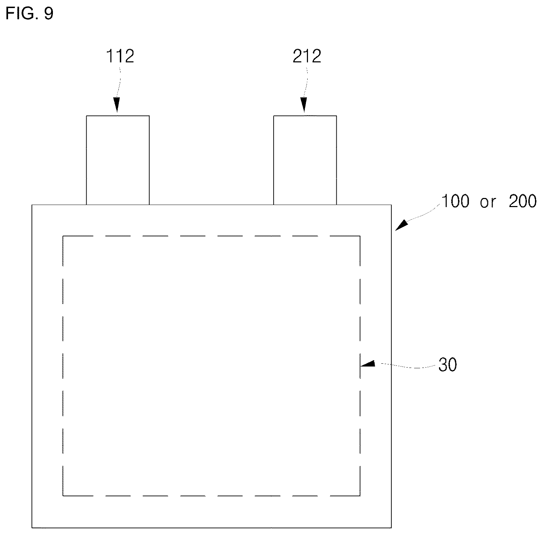

The positive electrode plate 100 may include a positive electrode substrate 110, a positive electrode active material layer 120, and a positive electrode uncoated portion. The positive electrode substrate 110 may be a metal sheet. For example, the positive electrode substrate 110 may be an aluminum foil. In the present disclosure, the positive electrode active material layer 120 may be provided only on one side of the positive electrode substrate 110. More specifically, the positive electrode active material layer 120 may be coated on one side of the positive electrode substrate 110. The positive electrode uncoated portion may refer to a region in the positive electrode substrate 110 where the positive electrode active material layer 120 is not provided. The positive electrode uncoated portion may be notched into a predetermined shape to form a positive electrode substrate tab (see 112 of FIG. 9, which is described below). In other embodiments, according to the structure of a secondary battery, a separate substrate tab may be coupled to the positive electrode uncoated portion. The positive electrode substrate tab is provided on each of the positive electrode plates 100 such that there is a plurality of positive electrode substrate tabs. Such a structure may be referred to as a multi-tap structure. The positive electrode substrate tabs may be assembled into one, welded, and electrically connected to terminals of a secondary battery (which will be described below). For this purpose, the positive electrode substrate tabs may be arranged in one direction of the electrode assembly 10.

In more detail, the positive electrode active material layer 120 may include a transition metal oxide. In some embodiments, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5,0<α<2); LiₐNi_{b}Co_{c}L¹_{d}GeO₂ (0.90≤a≤1.8, 0≤b≤0.9, 0≤c≤0.5,0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode plate 200 may include a negative electrode substrate 210, a negative electrode active material layer 220, and a negative electrode uncoated portion. The negative electrode substrate 210 may be a metal sheet. For example, the negative electrode substrate 210 may include copper or nickel foil. In some embodiments, the negative electrode active material layer 220 may be provided on only one side of the negative electrode substrate 210. More specifically, the negative electrode active material layer 220 may be coated on one side of the negative electrode substrate 210. The negative electrode uncoated portion may refer to a region of the negative electrode substrate 210 where the negative electrode active material layer 220 is not provided. The negative electrode uncoated portion may be notched into a predetermined shape to form a negative electrode substrate tab (see 212 of FIG. 9). In other embodiments, a separate substrate tab may be coupled to the negative electrode uncoated portion. The negative electrode substrate tab is provided on each of the negative electrode plates 200, and thus may be provided as a plurality of negative electrode substrate tabs. Such a structure may be referred to as a multi-tap structure. The negative electrode substrate tabs may be assembled into one, welded, and electrically connected to terminals of a secondary battery (which will be described below). For this purpose, the negative electrode substrate tabs may be arranged in one direction of the electrode assembly 10. The direction in which the negative electrode substrate tabs protrude may be the same as the direction in which the positive electrode substrate tabs protrude. But in other embodiments, depending on the type of secondary battery, the negative electrode substrate tabs may protrude in the opposite direction to the positive electrode substrate tabs.

The negative electrode active material layer 220 may include a carbon series material, Si, Sn, tin oxide, a tin alloy complex, a transition metal oxide, lithium metal nitrite, or a metal oxide.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator 300 is interposed between the positive electrode plate 100 and the negative electrode plate 200 to prevent a short circuit between the positive electrode plate 100 and the negative electrode plate 200. The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The above-described electrode assembly 10 may be accommodated in a secondary battery together with an electrolyte.

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof, and may be used alone or in combination of two or more types.

Additionally, when using a carbonate-based solvent, a cyclic carbonate and a chain carbonate may be used in combination.

In the above-described electrode assembly 10, the positive electrode active material layer 120 may be provided only on one side of the positive electrode substrate 110. In addition, the negative electrode active material layer 220 may be provided only on one side of the negative electrode substrate 210. The positive electrode substrate 110 and the negative electrode substrate 210, each of which includes an active material layer provided only on one side, may be folded so that the surfaces of each without the active material layer face inward. The blocking member 30 may be inserted each of the folded-over positive electrode substrate 110 surfaces and each of the the thus folded-over negative electrode substrate 210 surfaces as shown in FIG. 1.

In the present disclosure, a portion created by folding the positive electrode substrate 110 and a portion created by folding the negative electrode substrate 210 may be respectively referred to as the interior of the positive electrode substrate 110 and the interior of the positive electrode plate 100 and/or the interior of the negative electrode substrate 210 or the interior of the negative electrode plate 200. When a blocking member 30 is provided in the interiors of the positive electrode plate 100 and the negative electrode plate 200, the blocking member 30 is referred to as being provided inside the electrode assembly 10.

FIG. 1 illustrates the folded positive electrode substrate 110 and negative electrode substrate 210. The positive electrode substrate 110 and the negative electrode substrate 210 may be folded such that the folded portions thereof are angled. However, the positive electrode substrate 110 and the negative electrode substrate 210 may be folded such that the folded portions thereof are streamlined such that the cross-sections of the folded portions of the positive electrode substrate 110 and the negative electrode substrate 210 may be in a 'U' shape.

The blocking member 30 may be a plate shape having a predetermined thickness. For example, the blocking member 30 may be thicker than that of the positive electrode substrate 110 and/or the negative electrode substrate 210. Alternatively, the blocking member 30 may be in the shape of a sheet that is thinner than that of the positive electrode substrate 110 and/or the negative electrode substrate 210. The blocking member 30 may be sized so as not to be exposed to outside of the folded-over positive electrode substrate 110 and/or negative electrode substrate 210. further, the blocking member 30 may be in contact with the positive electrode substrate 110 and/or the negative electrode substrate 210that are spaced apart from each other by a predetermined distance.

The blocking member 30 may include one or both of a fire extinguishing material and an insulating material. In some examples, the blocking member 30 may be formed from the same materials as the positive electrode plate 100 and the negative electrode plate 200. Alternatively, the blocking member 30 may be formed from different materials as the positive electrode plate 100 and the negative electrode plate 200. In some examples, the blocking member 30 may have a multi-layer structure. Alternatively, in other examples, the blocking member 30 may have a single-layer structure including at least one of a fire extinguishing material, an insulating material, or a mixture thereof. That is, the blocking member 30 may be made of a structured material having a certain shape. As will be appreciated by those skilled in the art, a structured material is morphologically defined in contrast to an amorphous material that does not have a definite form.

In some examples, the blocking member 30 may include a fire extinguishing material or may be in the form of a single-layer sheet made of a fire extinguishing material. In other examples, the blocking member 30 may include an insulating material or may be in the form of a single-layer sheet made of an insulating material. For example, the blocking member 30 may include a fire extinguishing material and an insulating material or may be in the form of a single-layer sheet including the same. In a specific example, the blocking member 30 is in the form of a sheet of a double-layer structure including a fire extinguishing material sheet and an insulating material sheet. In other specific examples, the blocking member 30 is in the form of a sheet that is a multi-layer structure including a plurality of fire extinguishing material sheets and a plurality of insulating material sheets. In some examples, the plurality of fire extinguishing material sheets and the plurality of insulating material sheets may be alternately stacked.

In other example embodiments, the blocking member 30 may be provided as an amorphous material without a specific shape, such as a powder or liquid. When the blocking member 30 has a specific shape, the positive electrode substrate 110 and/or the negative electrode substrate 210 may be provided in a folded state. When the blocking member 30 is provided as an amorphous material, the blocking member 30 may be accommodated and sealed in a separate sealing material that seals the amorphous blocking member 30. After folding the positive electrode substrate 110 and/or the negative electrode substrate 210, the blocking member 30 may be inserted and then the edges of the positive electrode substrate 110 and/or the negative electrode substrate 210 may be sealed. That is, the accommodation space formed between the positive electrode substrate 110 and/or the negative electrode substrate 210 is sealed. Sealing of the edges of the positive electrode substrate 110 and/or the negative electrode substrate 210 may be performed by using an adhesive, an adhesive tape, or the like. Thus, even if provided as an amorphous material, the blocking member 30 does not leak out of the electrode assembly 10.

In still further embodiments where the blocking material 30 is provided as an amorphous material, the blocking member 30 may be formed into a regular shape by being coated on the positive electrode substrate 110 and/or the negative electrode substrate 210. Or the blocking member 30 may be coated on a separate film or sheet and then inserted into the positive electrode substrate 110 and/or the negative electrode substrate 210.

Regardless of whether the blocking member 30 is provided as a structured or amorphous material, sealing may be required due to a possible reaction with an electrolyte. If the blocking member 30 does not react with an electrolyte, the blocking member 30 itself or the positive electrode substrate 110 and/or the negative electrode substrate 210 need not be sealed. But if the blocking member 30 reacts with an electrolyte, the blocking member 30 itself or the positive electrode substrate 110 and/or the negative electrode substrate 210 may be sealed. That is, as described above, sealing of the blocking member 30 itself or sealing the positive electrode substrate 110 and/or the negative electrode substrate 210 need not be essential.

In the embodiment shown in FIG. 1, both the positive electrode substrate 110 and the negative electrode substrate 210 are folded, and the blocking member 30 is placed therein. However, in other embodiments, only the positive electrode substrate 110 is folded, and the blocking member 30 may be placed therein. An example of such an embodiment is illustrated in FIG. 2.

Referring to FIG. 2, a negative electrode substrate 210a is not folded and a negative electrode active material layer 220a is coated on both sides of the negative electrode substrate 210a. With the positive electrode plate 100a, a difference in elongation between the positive electrode substrate 110a and the positive electrode active material layer 120a may be greater than a different than in the difference in elongation between the negative electrode substrate 210a and the negative electrode active material layer 220a in a negative electrode plate 200a. Therefore, the positive electrode active material layer 120a may be coated only on the cross-section of the positive electrode substrate 110a, and a blocking member 30a may be placed inside the positive electrode substrate 110a.

In an electrode assembly 10a depicted in FIG. 2, the positive electrode plate 100a with the blocking member 30a placed therein and the negative electrode plate 200a without the blocking member 30a placed therein are alternately stacked. A separator 300a may be disposed between the positive electrode plate 100a and the negative electrode plate 200a, and between the negative electrode plate 200a and the positive electrode plate 100a. Accordingly, the electrode assembly 10a according to FIG. 2 may be thinner than the electrode assembly 10 according to FIG. 1.

In the electrode assemblies 10 and 10a shown in FIGS. 1 and 2, the positive electrode uncoated portion and the negative electrode uncoated portion are arranged in the same direction. In such an embodiment, a positive electrode substrate tab and a negative electrode substrate tab in a secondary battery may be arranged in the same direction.

Although not shown in the drawings, in other configurations of a secondary battery, a positive electrode uncoated portion and a negative electrode uncoated portion may be arranged in opposite directions. In such a case, a positive electrode substrate tab and a negative electrode substrate tab in a secondary battery may be arranged in opposite directions.

During a press process with a double-sided coated plate, wrinkles may occur in the plate due to a difference in elongation between a substrate and an active material. However, in the electrode assembly 10 depicted in FIG. 1, the positive electrode active material layer 120 is provided only on one side of the positive electrode substrate 110, and the negative electrode active material layer 220 is provided only on one side of the negative electrode substrate 210. Therefore, compared to a double-sided coated plate, the difference in elongation is less, and the occurrence of wrinkles can be reduced and/or prevented. The thicker the active material layer, the smaller the difference in elongation, and thus the wrinkle occurrence effect can be increased.

In the electrode assembly 10a depicted in FIG. 2, the negative electrode active material layer 220a is provided on both sides of the negative electrode substrate 210a, but the positive electrode active material layer 120a is provided only on side of the positive electrode substrate 110a. Therefore, compared to an electrode assembly having a positive electrode plate and a negative electrode plate provided with an active material layer on two sides, the electrode assembly 10a may have reduced and/or prevented occurrence of wrinkles.

In addition, as described above, because the blocking member 30, 30a including a fire extinguishing material and/or an insulating material is provided inside the electrode assembly 10, 10a, the performance of the secondary battery is not affected. And in an event such as overheating of or damage to the secondary battery, the blocking member 30, 30a provided inside the electrode assembly 10, 10a can delay or prevent a fire by suppressing ignition.

When a secondary battery is damaged, for example, when a plate is torn or punctured, a separator may be damaged, causing a short circuit to occur due to direct contact between a positive electrode substrate and a negative electrode substrate. But if there is a non-conductive or inert material in a short circuit area, the positive electrode substrate and the negative electrode substrate may not come into contact with each other, and thus a weak or no short circuit may occur and a fire area may be reduced.

In addition, if a damaged positive electrode substrate or negative electrode substrate penetrates a non-conductive material, the damaged positive electrode substrate or negative electrode substrate will contact the opposite side of the non-conductive material together with the non-conductive material. Therefore, the short circuit can be suppressed or reduced, which may end up with a small short circuit, and, thus, a fire may not be caused. An insulating material in the above-described blocking member as described above can play this role. Further, because the blocking member includes a fire extinguishing material, even if a large flame or short circuit occurs because of damage to the secondary battery, it can be suppressed and prevented from leading to a large fire.

If no fire occurs, a secondary battery that is damaged may lose functions as an electrolyte naturally evaporates due to a short circuit. Thus, a fire does not spread to the surroundings, and the damaged secondary battery only loses the functions. By providing a blocking member inside an electrode assembly, the performance of the secondary battery and battery module/pack can be improved and safety can be enhanced.

Hereinafter, electrode assemblies according to other embodiments of the present disclosure will be described.

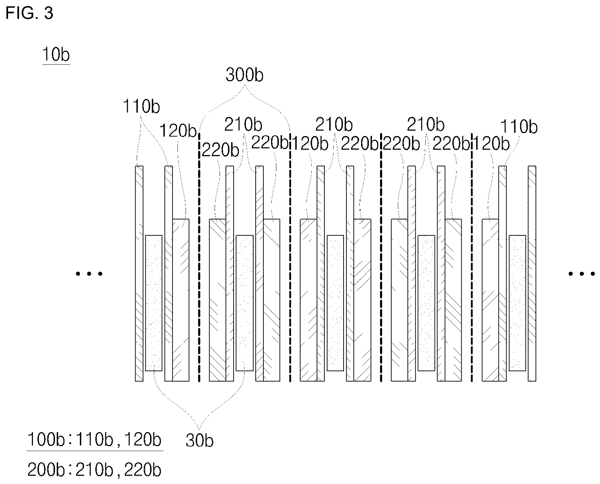

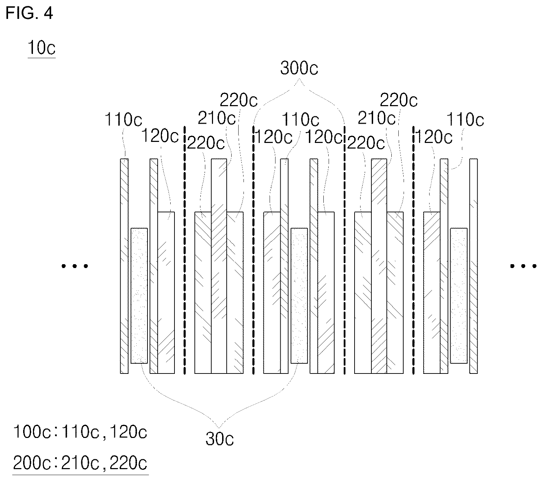

FIG. 3 is a cross-sectional view showing a portion of a stacked electrode assembly according to another embodiment of the present disclosure. FIG. 4 is a cross-sectional view showing a modified example of the electrode assembly according to FIG. 3.

Referring to FIG. 3, an electrode assembly 10b according to another embodiment of the present disclosure has a structure in which a blocking member 30b is provided between electrode plates that are not folded. In more detail, the electrode assembly 10b may include a plurality of positive electrode plates 100b, a plurality of negative electrode plates 200b, a plurality of separators 300b, and a plurality of blocking members 30b. The blocking members 30b may be identical to or similar to the blocking members 30 and 30a described above with reference to FIGS. 1 and 2.

In each of the positive electrode plates 100b, a positive electrode active material layer 120b may be coated only on one side of a positive electrode substrate 110b. The pair of positive electrode plates 100b may be arranged to face each other with the blocking member 30b placed therebetween and such that the other sides of the positive electrode substrates 110b without the positive electrode active material layer 120b face each other. The blocking member 30b may be placed between the pair of positive electrode substrates 110b that face each other.

In each of the negative electrode plates 200b, a negative electrode active material layer 220b may be coated on only one side of a negative electrode substrate 210b. A pair of negative electrode plates 200b may be arranged to face each other with the blocking member 30b placed therebetween and such that the other sides of the negative electrode substrate 210b without the negative electrode active material layer 220b face each other. The blocking member 30b may be placed between the pair of negative electrode substrate 210b that face each other.

The pair of positive electrode plates 100b and pair of negative electrode plates 200b may be alternately stacked. The separators 300b may be disposed between the pair of positive electrode plates 100b and the pair of negative electrode plates 200b and between the pair of negative electrode plates 200b and the pair of positive electrode plates 100b. The electrode assembly 10b may be maintained in a stacked state by being fixed with a finishing tape, an insulating tape, or the like.

Referring to FIG. 4, an electrode assembly 10c according to another embodiment of the present disclosure may have a structure in which a blocking member 30c is provided only inside a positive electrode plate 100c in the electrode assembly 10b as otherwise depicted in FIG. 3. That is, a negative electrode plate 200c may have a structure in which a negative electrode active material layer 220c is provided on both sides of the negative electrode plates and no blocking member 30c is provided with the negative electrode plates. As such, the positive electrode plate 100c may have a structure in which the positive electrode active material layer 120c is coated only on one side of the positive electrode substrate 110c. A pair of positive electrode plates 100c may be arranged to face each other with the blocking member 30c placed therebetween. The electrode assembly 10c may be formed by alternatively stacking the pair of positive electrode plates 100c having the blocking member 30c placed therein and the negative electrode plate 200c having the negative electrode active material layer 220c provided on both sides.

A separator 300c may be disposed between the pair of positive electrode plates 100c and the negative electrode plate 200c, and between the negative electrode plate 200c and the pair of positive electrode plates 100c. Accordingly, the electrode assembly 10c depicted in FIG. 4 may be thinner than the electrode assembly 10b depicted in FIG. 3. The electrode assembly 10c may be maintained in a stacked state by being fixed with a finishing tape, an insulating tape, or the like.

In the electrode assemblies 10b and 10c depicted in FIGS. 3 and 4, a positive electrode uncoated portion and a negative electrode uncoated portion are arranged in the same direction. However, depending on the type of secondary battery, the positive electrode uncoated portion and the negative electrode uncoated portion may be arranged in opposite directions.

Unlike the above-described separators, a single separator may be folded in a 'Z' shape to insulate a positive electrode plate and a negative electrode plate from each other. In the present disclosure, an electrode assembly in which a separator is folded in a zigzag manner in a 'Z' shape is referred to as a 'Z-stack type electrode assembly.'

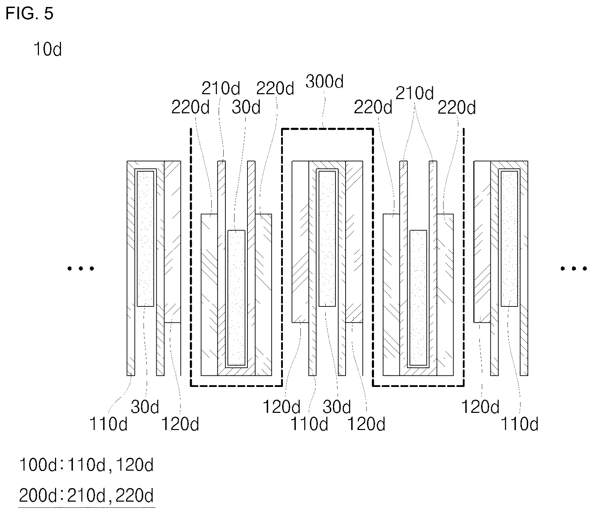

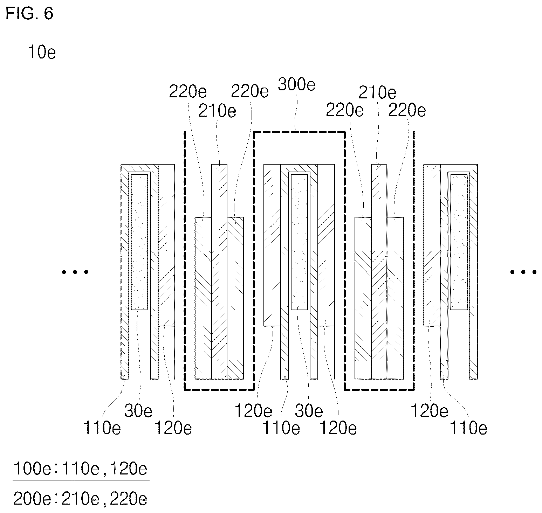

FIG. 5 is a cross-sectional view showing a portion of a Z-stacked electrode assembly according to an embodiment of the present disclosure. FIG. 6 is a cross-sectional view showing a modified example of the electrode assembly according to FIG. 5.

Referring to FIG. 5, a Z-stack type electrode assembly 10d according to an embodiment of the present disclosure may include a plurality of positive electrode plates 100d, a plurality of negative electrode plates 200d, one single separator 300d, and a plurality of blocking members 30d. The blocking members 30d may be identical to or similar to the blocking members 30 and 30a described above with FIGS. 1 and 2. FIG. 5 shows that positive electrode substrates 110d and negative electrode substrates 210d may be folded such that the folded portions thereof are angled relative to each other. However, in other embodiments, the positive electrode substrates 110d and the negative electrode substrates 210d may be folded such that the folded portions thereof are streamlined. That is, in FIG. 5, the cross-sections of the folded portions of the positive electrode substrates 110d and the negative electrode substrates 210d may be in a 'U' shape.

In addition, the separator 300d is also shown as having a folded portion that is angled relative to other portions of the separator 300d. The separator 300d may have a cross-section of a folded portion that is in a 'U' shape. In other embodiments, the folded portion of the separator 300d may have a cross-section that is in a 'V' shape.

The positive electrode plates 100d and the negative electrode plates 200d depicted in FIG. 5 may be identical to or similar to the positive electrode plate 100 and the negative electrode plate 200 depicted in FIG. 1.

In the positive electrode plates 100d, a positive electrode active material layer 120d may be provided on only one side of a positive electrode substrate 110d. And in each of the negative electrode plates 200d, a negative electrode active material layer 220d may be provided on only one side of a negative electrode substrate 210d. The positive electrode substrate 110d and the negative electrode substrate 210d may be folded so that the surfaces thereof without an active material layer face inward. The blocking members 30d may be placed in each of the folded-over positive electrode substrate 110d and thus folded-over negative electrode substrate 210d.

After the separator 300d is folded in a zigzag form, the positive electrode plates 100d and negative electrode plates 200d may be placed in portions of the separator 300d created by the folding. Here, the positive electrode plates 100d and the negative electrode plates 200d may be alternately arranged with the separator 300d disposed therebetween. In addition, the positive electrode plates 100d and the negative electrode plates 200d may be arranged so as to face opposite directions. That is, a positive electrode uncoated portion and a negative electrode uncoated portion may be arranged so as to face opposite directions. However, depending on the type of secondary battery, the positive electrode plates 100d and the negative electrode plates 200d may be arranged so that the positive electrode uncoated portion and the negative electrode uncoated portion face the same direction.

Referring to FIG. 6, a negative electrode substrate 210e is not folded, and a negative electrode active material layer 220e is coated on both sides of the negative electrode substrate 210e. Otherwise, the positive electrode plate 100e and the negative electrode plate 200e depicted in FIG. 6 may be identical to or similar to the positive electrode plate 100a and the negative electrode plate 200a depicted in FIG. 2. In an electrode assembly 10e according to the embodiment shown in FIG. 6, a positive electrode plate 100e having a blocking member 30e inserted thereto and a negative electrode plate 200e having no blocking member 30e inserted thereto may be alternately stacked with a separator 300e disposed therebetween. Thus, the electrode assembly 10e depicted in FIG. 6 may be thinner than the electrode assembly 10d depicted in FIG. 5.

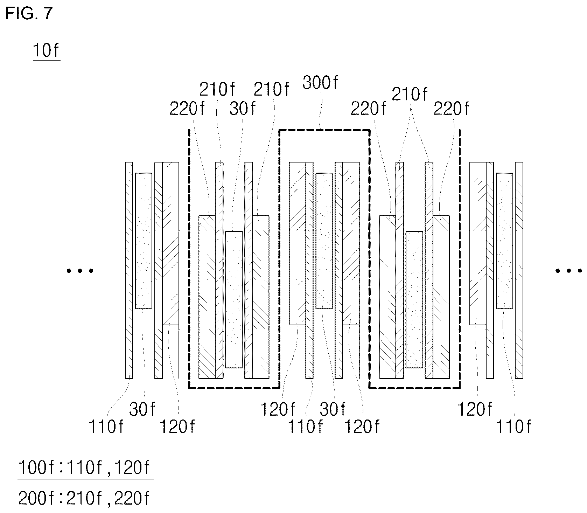

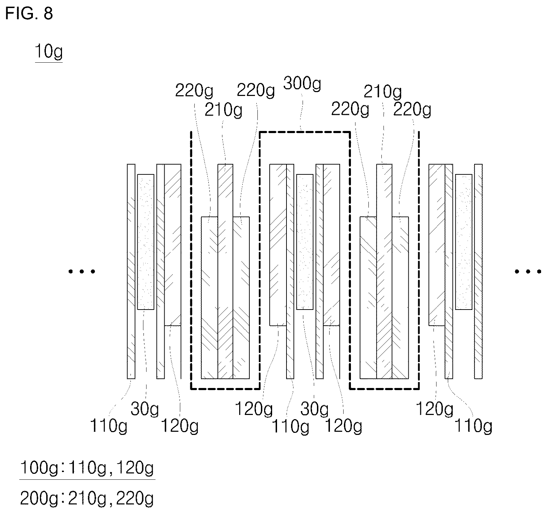

FIG. 7 is a cross-sectional view showing a portion of a Z-stacked electrode assembly according to another embodiment of the present disclosure. FIG. 8 is a cross-sectional view showing a modified example of the electrode assembly according to FIG. 7.

Referring to FIG. 7, a Z-stack type electrode assembly 10f according to another embodiment of the present disclosure may include a plurality of positive electrode plates 100f, a plurality of negative electrode plates 200f, a separator 300f, and a plurality of blocking members 30f. The electrode assembly 10f may have a structure in which the blocking members 30f are provided between electrode plates that are unfolded substrates. The positive electrode plates 100f, the negative electrode plates 200f, and the blocking members 30f may be identical to or similar to the positive electrode plates 100b, the negative electrode plates 200b, and the blocking members 30b described above with reference to FIG. 3.

IA positive electrode active material layer 120f may be coated on only one side of a positive electrode substrate 110f. And a pair of positive electrode plates 100f may be disposed to face each other. The pair of positive electrode plates 100f without a positive electrode active material layer 120f may be arranged so that the other sides thereof face each other. The blocking members 30f may be placed between the pair of positive electrode substrates 110f facing each other.

In each of the negative electrode plates 200f, a negative electrode active material layer 220f may be coated only one side of a negative electrode substrate 210f. And a pair of negative electrode plates 200f may be arranged to face each other with the blocking member 30f placed therebetween. The pair of negative electrode plates 200f may be arranged so that the other side of the negative electrode substrates 210f without the negative electrode active material layer 220f face each other. The blocking members 30f may be placed between the pair of negative electrode substrates 210f facing each other.

After the separator 300f is folded in a zigzag form, the pair of positive electrode plates 100f and negative electrode plates 200f may be placed in portions of the separator 300f that are created by the folding. The positive electrode plates 100f and the negative electrode plates 200f may be alternately arranged with the separator 300f disposed therebetween, with the positive electrode plates 100f and the negative electrode plate 200f may be arranged so as to face opposite directions. That is, positive electrode uncoated portions and negative electrode uncoated portions may be arranged so as to face opposite directions. However, depending on the type of secondary battery, the positive electrode plates 100f and the negative electrode plates 200f may be arranged so that the positive electrode uncoated portions and the negative electrode uncoated portions face the same direction.

The electrode assembly 10f may be maintained in a stacked state by being fixed with a finishing tape, an insulating tape, or the like.

An electrode assembly 10g according to FIG. 8 may have a structure in which a blocking member 30g is provided only inside a positive electrode plate 100g in the electrode assembly 10f otherwise depicted in FIG. 7. That is, a negative electrode plate 200g may have a structure in which a negative electrode active material layer 220g is provided on both sides of the negative electrode plate 200g and no blocking member 30g is provided. The positive electrode plate 100g may have a structure in which a positive electrode active material layer 120g is coated only on one side of a positive electrode substrate 110g. A pair of positive electrode plates 100g may be arranged to face each other with the blocking member 30g placed therebetween. The electrode assembly 10g may be formed by alternatively stacking the pair of positive electrode plates 100g having the blocking member 30g inserted thereto and the negative electrode plate 200g having the negative electrode active material layer 220g provided on both sides may be alternately stacked, with a separator 300g disposed between the positive electrode plates 100g and the negative electrode plate 200g. Thus, the electrode assembly 10g according to FIG. 8 may be thinner than the electrode assembly 10f according to FIG. 7. The electrode assembly 10g may be maintained in a stacked state by being fixed with a finishing tape, an insulating tape, or the like.

FIG. 9 is a plan view of a stacked electrode assembly according to embodiments of the present disclosure.

Referring to FIG. 9, the electrode assembly 10 according to the above-described embodiments may be the shape of the positive electrode plate 100 or the negative electrode plate 200 when viewed from above (including the shape of the separator 300, which is not shown in the drawing). That is, the blocking member 30 is placed inside an electrode plate, and thus may not be exposed to outside of the electrode plate. Since the electrode assembly 10 is a stacked type, the positive electrode tabs 112 may overlap each other and the negative electrode substrate tabs 212 may overlap each other. FIG. 9 shows only an example in which the positive electrode tabs 112 and the negative electrode substrate tabs 212 being arranged in the same direction. However, as described above, in other embodiments the positive electrode tabs 112 and the negative electrode substrate tabs 212 may be arranged in opposite directions.

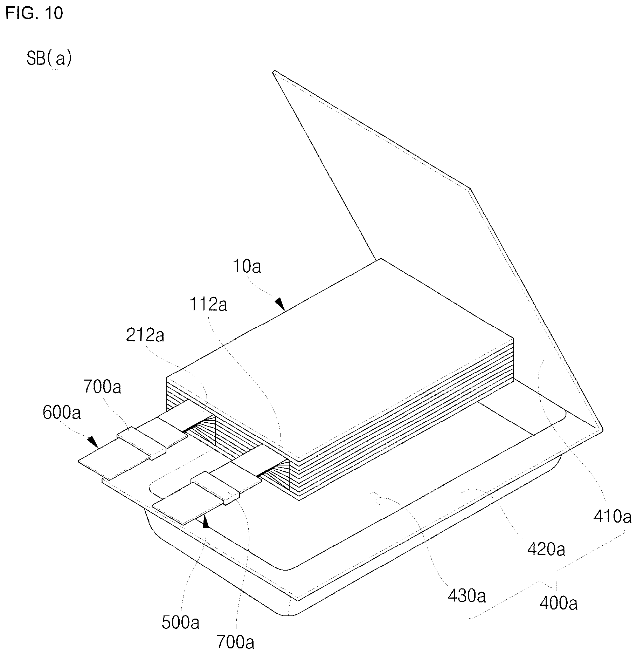

The electrode assemblies according to the aforementioned various embodiments can be applied to various types of secondary batteries. FIGS. 10 to 12 are drawings showing exemplary secondary batteries to which an electrode assembly according to embodiments of the present disclosure is applied.

Referring to FIG. 10, an exemplary secondary battery SB(a) may be a pouch-type battery. That is, the secondary battery SB(a) may include a pouch-type case 400a, an electrode assembly 10, a pair of strip terminals 500a and 600a, and a pair of insulating members 700a.

The case 400a can accommodate an electrode assembly 10 together with an electrolyte. The case 400a may be referred to as a pouch, a pouch exterior material, a pouch case, a laminate exterior material, etc. The case 400a may be formed by folding plate-shaped exterior materials to face each other to form a cover 410a and a recess 430a.

The recess 430a may be made by pressing or drawing one side of the exterior material. The electrode assembly 10 is accommodated in the recess 430a, and the recess 430a may thereby be referred to as an accommodation space. A portion where the recess 430a is not provided may be the cover 410a. The edge of one side where the recess 430a is made may be a sealing part 420a that is sealed with the cover 410a.

Before sealing the sealing part 420a, the strip terminals 500a and 600a may be electrically connected to the positive electrode substrate tab 112 and the negative electrode substrate tab 212, respectively. The strip terminals 500a and 600a may be exposed to outside of the case 400a, and then the sealing part 420a is sealed. The portions where the strip terminals 500a and 600a and the case 400a or the sealing part 420a come into contact may be insulated by the insulating members 700a. The sealing part 420a may be bonded to the cover 410a by heat fusion, etc. while the electrode assembly 10 is accommodated in the recess 430a. If necessary, an adhesive/adhesive layer/adhesive member, etc. for fixing the electrode assembly 10 may be provided between the cover 410a and the electrode assembly 10.

The electrode assembly 10 may be any one of the electrode assemblies 10 to 10g according to FIGS. 1 to 8. As shown in FIG. 10, the electrode assembly 10 may have a positive electrode substrate tab 112 and a negative electrode substrate tab 212 arranged toward one end in the longitudinal direction of the case 400a. That is, the electrode assembly 10 may have a form in which the positive electrode substrate tab 112 and the negative electrode substrate tab 212 are arranged in the same direction.

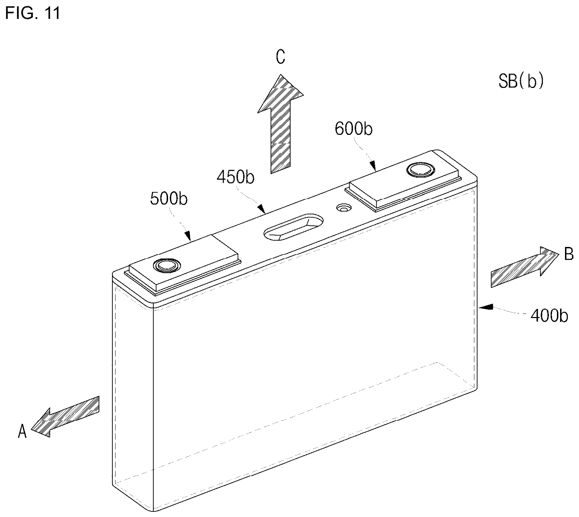

Referring to FIG. 11, an exemplary secondary battery SB(b) may be a prismatic battery. In such an embodiment, the secondary battery SB(b) may include a case 400b having a rectangular shape, an electrode assembly 10, and a cap assembly.

The case 400b may have an accommodation space inside and an open top end in the longitudinal direction. The electrode assembly 10 may be inserted into the case 400b together with an electrolyte through the opened top end. The cap assembly may be coupled to seal the opened top end.

The case 400b may include a rectangular bottom surface and four side surfaces connected to the bottom surface. Among the side surfaces, surfaces having a relatively large area may be referred to as long sides, and surfaces having a relatively small area may be referred to as short sides. The open top end may be one of the short sides. The case 400b may be made of a metal material such as steel, nickel-plated steel, a steel alloy, aluminum, an aluminum alloy, and a deep drawing cold sheet (SPCE).

The cap assembly may include a rectangular cap plate 450b, with a first terminal portion 500b and a second terminal portion 600b coupled to the cap plate 450b. The first terminal portion 500b and the second terminal portion 600b may be electrically connected to a positive electrode substrate tab and a negative electrode substrate tab of the electrode assembly 10, respectively. One of the first terminal portion 500b and the second terminal portion 600b may be insulated from the cap plate 450b, and the other of first terminal portion 500b and the second terminal portion 600b may be electrically connected to the cap plate 450b.

The electrode assembly 10 may be any one of the electrode assemblies 10 to 10g according to FIGS. 1 to 8. Since the electrode assembly 10 has a rectangular parallelepiped shape similar to the case 400b, the long sides of the case 400b and the long sides of the electrode assembly 10 may be arranged to face each other. The electrode assembly 10 may have a positive electrode substrate tab and a negative electrode substrate tab arranged toward the cap plate 450b, which is the direction toward indicated by C in FIG. 11. Thus, the electrode assembly 10 may be shaped such that the positive electrode substrate tab and the negative electrode substrate tab are arranged in the same direction.

In other embodiments, in the electrode assembly 10, one of the positive electrode substrate tab and the negative electrode substrate tab may be arranged in the direction A, and the other may be arranged in the direction B. That is, the electrode assembly 10 may have the positive electrode substrate tab and the negative electrode substrate tab arranged in opposite directions. The positive electrode substrate tab and the negative electrode substrate tab may be electrically connected to a positive electrode current collector plate and a negative electrode current collector plate, respectively.

In the example depicted in FIG. 11, the positive electrode substrate tab is arranged in the direction A and the negative electrode substrate tab is arranged in the direction B. In this arrangement, the positive electrode current collector plate may be positioned between the positive electrode substrate tab and the case 400b in the direction A. The negative electrode current collector plate may be positioned between the negative electrode substrate tab and the case 400b in the direction B. Thus, both of an electrode assembly in which the substrate tabs are arranged in the same direction and an electrode assembly in which the substrate tabs are arranged in opposite directions may be used in a prismatic secondary battery.

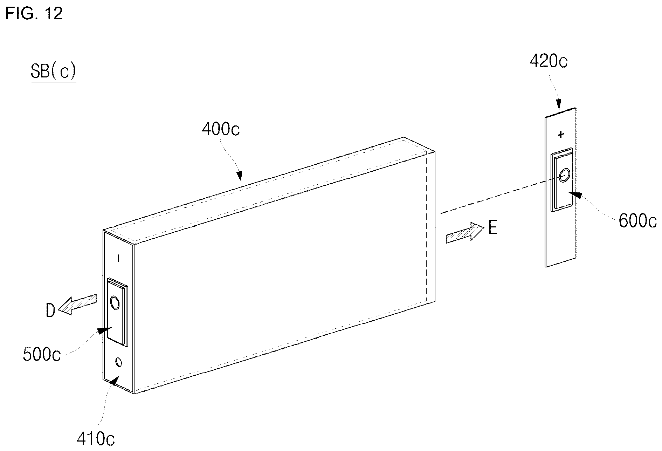

Referring to FIG. 12, an exemplary secondary battery SB(c) may be a prismatic battery having a pair of cap assemblies. That is, the secondary battery SB(c) may include a rectangular parallelepiped case 400c, an electrode assembly 10, and first and second cap assemblies.

The case 400c may have an accommodation space inside and may be shaped to be open at both ends in the longitudinal direction. The electrode assembly 10 may be accommodated together with an electrolyte by being inserted into the case 400c through the open ends. First and second cap assemblies may be coupled to the open ends. The case 400c may include a rectangular bottom surface, two side surfaces connected to the bottom surface, and a top surface connected to the side surfaces. The open ends may refer to portions excluding the bottom surface, the side surfaces, and the top surface. The directions in which the case 400c is opened are indicated by D and E in FIG. 12. The case 400c may be formed from a metal material such as steel, nickel-plated steel, a steel alloy, aluminum, an aluminum alloy, and a deep drawing cold sheet (SPCE).

The first cap assembly may include a rectangular cap plate 410c, with a first terminal portion 500c coupled to the cap plate 410c. The second cap assembly may include a rectangular cap plate 420c, with a second terminal portion 600c coupled to the cap plate 420c. The first terminal portion 500c and the second terminal portion 600c may be electrically connected to the positive electrode substrate tab and the negative electrode substrate tab of the electrode assembly 10, respectively. The first terminal portion 500c and the second terminal portion 600c may be insulated from the cap plates 410c and 420c. In this case, the cap plates (410c, 420c) and the case 400c may not have an electrical polarity.

In other embodiments, the first terminal portion 500c and the second terminal portion 600c may be electrically connected to the cap plates 410c and 420c. In this configuration, the first terminal portion 500c and the cap plate 410c may have the same polarity. The second terminal portion 600c may also have the same polarity as the cap plate 420c. Thus, the cap plates 410c and 420c and the case 400c may be insulated from each other, and the case 400c may not have polarity.

The electrode assembly 10 may be any one of the electrode assemblies (10 to 10g) according to FIGS. 1 to 8 described above. Since the electrode assembly 10 has a rectangular parallelepiped shape similar to the case 400c, the side surface of the case 400c and the long side portion of the electrode assembly 10 may be arranged to face each other. The electrode assembly 10 may have a positive electrode substrate tab and a negative electrode substrate tab respectively arranged toward the cap plates 410c and 420c. The directions toward the cap plates 410c and 420c are directions indicated by D and E in FIG. 12. That is, in the electrode assembly 10, one of the positive electrode substrate tab and the negative electrode substrate tab may be arranged in the direction D, and the other of the positive electrode substrate tab and the negative electrode substrate tab be arranged in the direction E such that the positive electrode substrate tab and the negative electrode substrate tab may be arranged in opposite directions. The positive electrode substrate tab and the negative electrode substrate tab may be electrically connected to a positive electrode current collector plate and a negative electrode current collector plate, respectively.

As the negative electrode substrate tab may be arranged in the direction D and the positive electrode substrate tab may be arranged in the direction E, the negative electrode current collector plate may be electrically connected to a first terminal portion 500c in the D direction. Further, the positive electrode current collector plate may be electrically connected to a second terminal portion 600c in the E direction. A form in which the first terminal portion 500c and the second terminal portion 600c are provided at each of the longitudinal ends of the secondary battery SB(c) may be referred to as a "side terminal type secondary battery."

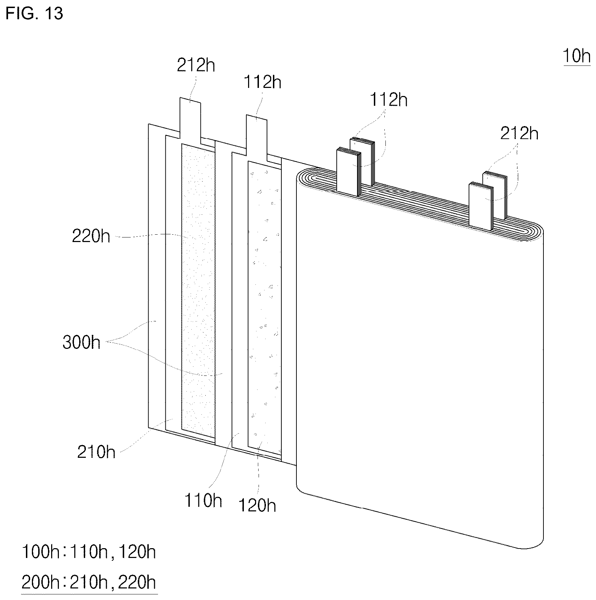

The electrode assembly according to another embodiment of the present disclosure may be a rolled electrode assembly rather than a laminated electrode assembly. In this regard, FIG. 13 is a perspective view schematically showing an electrode assembly according to another embodiment of the present disclosure.

An electrode assembly 10h according to another embodiment of the present disclosure may include a positive electrode plate 100h, a negative electrode plate 200h, and a separator 300h. In this case, a single positive electrode plate 100h is provided and a single negative electrode plate 200h is provided. The separator 300h is disposed between the positive electrode plate 100h and the negative electrode plate 200h, with the positive electrode plate 100h and the negative electrode plate 200h are wound with the separator 300h interposed therebetween. The wound electrode assembly 10h may be wound in a roughly flat shape as shown in FIG. 13. Alternatively, although not shown in the drawing, the electrode assembly 10h may be wound in a cylindrical shape. Regardless of the specifics of the winding, a form in which the positive electrode plate 100h, the negative electrode plate 200h, and the separator 300h are wound together may be referred to as the wound electrode assembly 10h. The wound electrode assembly 10h may additionally have the separator 300h disposed on the outermost wound part. Since FIG. 13 illustrates the appearance of the wound electrode assembly 10h. Although the above-described blocking members are not shown in FIG. 13, the blocking members may also be applied to the wound electrode assembly 10h. In this case, the positive electrode plate and the negative electrode plate may be provided as an elongated roll, rather than a plurality of plates and wound, and, thus, the above-described blocking members may be applied. The longitudinal section of the electrode assembly to which the blocking member is applied may be identical or similar to the above-described embodiments. The wound electrode assembly 10h may be wound flat and used in the pouch-type or prismatic secondary battery depicted in FIG. 10. Alternatively, a cylindrical electrode assembly may be applied to a cylindrical secondary battery. When the wound electrode assembly 10h is used in various types of secondary batteries, the shapes and positions of a positive electrode substrate tab and a negative electrode substrate tab may be changed to suit the structure of secondary battery.

The electrode assembly according to the embodiments of the present disclosure can be applied to the aforementioned various types of secondary batteries. Because the structure and components for ignition suppression are provided inside an electrode plate, the performance of a secondary battery and battery module/pack is not affected in general operating conditions. However, in special circumstances such as damage to the secondary battery or battery module/pack, ignition can be suppressed and a fire can be delayed. Accordingly, the performance of the secondary battery and battery module/pack can be improved and battery safety can be enhanced.

## Claims

1. An electrode assembly (10, 10a, 10b, 10c, 10d, 10e, 10f, 10g) comprising:
a plurality of positive electrode plates (100, 100a, 100b, 100c, 100d, 100e, 100f, 100g) each of which comprises a positive electrode substrate (110, 110a, 110b, 110c, 110d, 110f, 110g), a positive electrode active material layer (120, 120a, 120b, 120c, 120d, 120f, 120g) provided on a side of the positive electrode substrate (110, 110a, 110b, 110c, 110d, 110f, 110g), and the positive electrode substrate (110, 110a, 110b, 110c, 110d, 110f, 110g) comprises a positive electrode uncoated portion where the positive electrode active material layer (120, 120a, 120b, 120c, 120d, 120f, 120g) is not provided;
a plurality of negative electrode plates (200, 200a, 200b, 200c, 200d, 200e, 200f, 200g);
at least one separator (300, 300a, 300b, 300c, 300d, 300e, 300f, 300g) interposed between each of the positive electrode plates (100, 100a, 100b, 100c, 100d, 100e, 100f, 100g) and each of the negative electrode plates (200, 200a, 200b, 200c, 200d, 200e, 200f, 200g); and
blocking members (30, 30a, 30b, 30c, 30d, 30e, 30f, 30g) inserted into one of the positive electrode plates (100, 100a, 100b, 100c, 100d, 100e, 100f, 100g) and the negative electrode plates (200, 200a, 200b, 200c, 200d, 200e, 200f, 200g).

2. The electrode assembly (10, 10a, 10d, 10e) as claimed in claim 1, wherein the positive electrode plates (100, 100a, 100d, 100e) are folded so that the positive electrode uncoated portions face inward, and the blocking members (30, 30a, 30d, 30e) are placed in the folded positive electrode plates.

3. The electrode assembly (10, 10a, 10b, 10c, 10d, 10e, 10f, 10g) as claimed in claim 1, wherein the positive electrode uncoated portions are arranged to face each other, and the blocking members (30, 30a, 30b, 30c, 30d, 30e, 30f, 30g) are placed between the positive electrode substrates (110, 110a, 110b, 110c, 110d, 110f, 110g).

4. The electrode assembly (10, 10b, 10d, 10f, 10g) as claimed in claim 2,
wherein the negative electrode plates (200, 200b, 200d, 200f, 200g) each comprise a negative electrode substrate (210, 210b, 210d, 210f), a negative electrode active material layer (220, 220b, 220d, 220f, 220g) provided on a side of the negative electrode substrate (210, 210b, 210d, 210f), and the negative electrode substrate (210, 210b, 210d, 210f) comprises a negative electrode uncoated portion where the negative electrode active material layer (220, 220b, 220d, 220f, 220g) is not provided.

5. The electrode assembly (10, 10d) as claimed in claim 4, wherein the negative electrode plates (200, 200d) are folded so that the negative electrode uncoated portions face inward, and the blocking members (30, 30d) are placed in the folded positive electrode plates (100, 100d).

6. The electrode assembly (10, 10b, 10d, 10f, 10g) as claimed in claim 4,
wherein the negative electrode uncoated portions are arranged to face each other, and the blocking members (30, 30b, 30d, 30f, 30g) are placed between the negative electrode substrates (210, 210b, 210d, 210f, 210g).

7. The electrode assembly (10, 10a, 10d, 10e) as claimed in claim 2, wherein the negative electrode plates (200, 200a, 200d, 200e) each comprises a negative electrode substrate (210, 210a, 210d, 210e), a negative electrode active material layer (220, 220a, 220d, 220e) provided on both sides of the negative electrode substrate (210, 210a, 210d, 210e), and the negative electrode substrate (210, 210a, 210d, 210e) comprises a negative electrode uncoated portion where the negative electrode active material layer (220, 220a, 220d, 220e) is not provided.

8. The electrode assembly (10, 10a, 10b, 10c) as claimed in claim 1, wherein the separator (300, 300a, 300b, 300c) includes a plurality of separators (300, 300a, 300b, 300c) and the electrode assembly (10, 10a, 10b, 10c) is configured such that the positive electrode plates (100, 100a, 100b, 100c), the separators (300, 300a, 300b, 300c), and the negative electrode plates (200, 200a, 200b, 200c) are stacked.

9. The electrode assembly (10d, 10e, 10f, 10g) as claimed in claim 1, wherein the separator (300d, 300e, 300f, 300g) is folded in a zigzag form, and the positive electrode plates (100d, 100e, 100f, 100g) and the negative electrodes plate are alternately inserted to the separator (300d, 300e, 300f, 300g).

10. The electrode assembly (10, 10a, 10b, 10c, 10d, 10e, 10f, 10g) as claimed in claim 1, wherein the electrode assembly (10, 10a, 10b, 10c, 10d, 10e, 10f, 10g) is a wound structure in which the separator (300, 300a, 300b, 300c, 300d, 300e, 300f, 300g) is interposed between the positive electrode plate (100, 100a, 100b, 100c, 100d, 100e, 100f, 100g) and the negative electrode plate (200, 200a, 200b, 200c, 200d, 200e, 200f, 200g).

11. The electrode assembly (10, 10a, 10b, 10c, 10d, 10e, 10f, 10g) as claimed in any one of the preeding claims, wherein the blocking members (30, 30a, 30b, 30c, 30d, 30e, 30f, 30g) include at least one of a fire extinguishing material and an insulating material.

12. The electrode assembly (10, 10a, 10b, 10c, 10d, 10e, 10f, 10g) as claimed in any one of the preceding claims, wherein the blocking members (30, 30a, 30b, 30c, 30d, 30e, 30f, 30g) are in the form of a sheet.

13. The electrode assembly (10, 10a, 10b, 10c, 10d, 10e, 10f, 10g) as claimed in any one of the preceding claims, wherein the blocking members (30, 30a, 30b, 30c, 30d, 30e, 30f, 30g) are thicker than the positive electrode substrates (110, 110a, 110b, 110c, 110d, 110f, 110g).

14. The electrode assembly (10, 10a, 10b, 10c, 10d, 10e, 10f, 10g) as claimed in claim 14, wherein the blocking members (30, 30a, 30b, 30c, 30d, 30e, 30f, 30g) are single-layer structures or multi-layer structures.

15. The electrode assembly (10, 10a, 10b, 10c, 10d, 10e, 10f, 10g) as claimed in any one of the preceding claims, wherein the blocking members (30, 30a, 30b, 30c, 30d, 30e, 30f, 30g) comprise at least one of the fire extinguishing material and the insulating material coated on the positive electrode substrates (110, 110a, 110b, 110c, 110d, 110f, 110g) or the negative electrode substrates (210, 210a, 210b, 210d, 210e, 210f).
